# EUROPEAN PATENT SPECIFICATION

(11) **EP 2 937 530 B1**
(45) Date of publication and mention of the grant of the patent: **01.11.2017**
(21) Application number: 15161325.4
(22) Date of filing: 27.03.2015
(51) Int. Cl.: F01L 3/00, F01L 3/22, F01L 3/20, F02F 1/42, F02B 31/00

(54) **INTERNAL COMBUSTION ENGINE**
VERBRENNUNGSMOTOR
MOTEUR À COMBUSTION INTERNE

(30) Priority: 31.03.2014 JP 2014071102
(43) Date of publication of application: 28.10.2015
(73) Proprietor: TOYOTA JIDOSHA KABUSHIKI KAISHA, Toyota-shi, Aichi-ken 471-8571 (JP)
(72) Inventor: Kamei, Nobuhiro, Osaka 563-8651 (JP); Sasaki, Yasuji, Aichi-ken 471-8571 (JP); Abe, Kazuyoshi, Aichi-ken 471-8571 (JP)
(74) Representative: D Young & Co LLP

(56) References cited:
- WO-A2-2007/132311
- JP-A- 2001 173 513
- JP-A- 2005 061 368
- JP-A- 2013 083 218

## Description

### BACKGROUND OF THE INVENTION

### 1. Field of the Invention

The invention relates to an internal combustion engine that is mounted in a vehicle or the like.

### 2. Description of Related Art

A vortex of airflow that is generated in a combustion chamber of a cylinder and that spins vertically, that is, a so-called tumble flow is important for intake air and fuel to be mixed well and to increase a flame propagation velocity in the combustion chamber. For example, in an internal combustion engine disclosed in Japanese Patent Application Publication No. 2013-011229 (JP 2013-011229 A), wall surfaces in lower sections of two intake ports, each of which is continuously connected to a combustion chamber of one cylinder, are recessed (swollen) to inner sides, to which the wall surfaces approach each other. In this way, a cross-sectional area of an opening in the lower section of each intake port is increased, and a flow velocity of intake air that flows along a lower surface of the intake port is increased. Thus, a tumble flow is intensified. Other examples are described in JP 2001-173513 A and JP 2013-083218 A.

There is a case where the intake air that flows through the intake port toward the combustion chamber of the cylinder collides with an umbrella section of a valve body of an intake valve as a poppet valve or collides with a valve seat, on which the valve body of the intake valve is seated. For this reason, there is also a case where a tumble flow generated in the combustion chamber is weakened and thus a tumble ratio that is a ratio of a flow velocity of the tumble flow to a rotational speed of the internal combustion engine is reduced.

The intake air that attempts to flow into the combustion chamber from the intake port includes: a linear flow toward a center axis of the cylinder or an exhaust port side, along an upper surface of the umbrella section of the valve body of the intake valve; and a flow toward a bore wall side that is curved to avoid the valve body of the intake valve. The curved flow toward the bore wall side of the cylinder generates a reverse tumble flow that spins in a direction reverse to a positive tumble flow generated by the linear flow toward the center axis of the cylinder or the exhaust port side, and causes a reduction in the tumble ratio.

### SUMMARY OF THE INVENTION

The invention provides an internal combustion engine that intensifies a tumble flow in a combustion chamber of a cylinder.

An aspect of the invention is an internal combustion engine that includes a cylinder, an intake valve, an exhaust port and an intake port. The cylinder defines a combustion chamber. The intake valve includes a valve body. The valve body includes an umbrella section. The intake port includes a main flow passage section and a throat section. The main flow passage section is configured to distribute intake air toward the combustion chamber. The main flow passage section communicates with the combustion chamber via the throat section. In the internal combustion engine, the main flow passage section includes a first surface and a second surface. The first surface is located on a combustion chamber side of the main flow passage in a side cross-sectional view of the intake port. The second surface faces the first surface. The first surface has a linear shape. A first extended line is located on an opposite side of an exhaust port side portion of the umbrella section from the combustion chamber when the intake valve is in a state of a maximum lift amount, wherein the exhaust port side portion is a portion of the umbrella section closest to the exhaust port and the first extended line is defined by extending an end of the first surface toward the combustion chamber. A crossing position between the end of the first surface and the throat section has a bent shape. A second extended line is located at the combustion chamber side rather than a portion of the valve seat, the portion is the closest portion of the valve seat to the exhaust port. The second extended line being defined by extending a middle line located at the middle of the first surface and the second surface toward the combustion chamber.

In the internal combustion engine, the throat section may include a base section that has a cylindrical internal circumference, and an edge on a main flow passage section side of the base section may be located at the same height from the valve seat for the entire circumference of the base section.

In the internal combustion engine, the throat section may include a head section that has an internal circumference in a partially truncated conical shape, and the head section may be located at the main flow passage section side rather than the base section, and a crossing section between the base section and the head section has a bent shape.

According to the above configuration, it is possible to intensify a tumble flow in the combustion chamber of the cylinder in the internal combustion engine.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a side cross-sectional view of an intake port and a ceiling section of a combustion chamber in an internal combustion engine according to an embodiment of the invention;
FIG. 2 is a side cross-sectional view that schematically shows a flow of intake air in the intake port in the internal combustion engine according to the embodiment;
FIG. 3 is an end view that is taken along line III-III in FIG. 1 and shows a cross-sectional shape of an opening of a main flow passage section of the intake port in the internal combustion engine according to the embodiment; and
FIG. 4 is a side cross-sectional view of main components in which an opening of the intake port and a valve seat in the internal combustion engine according to the embodiment are enlarged.

### DETAILED DESCRIPTION OF EMBODIMENTS

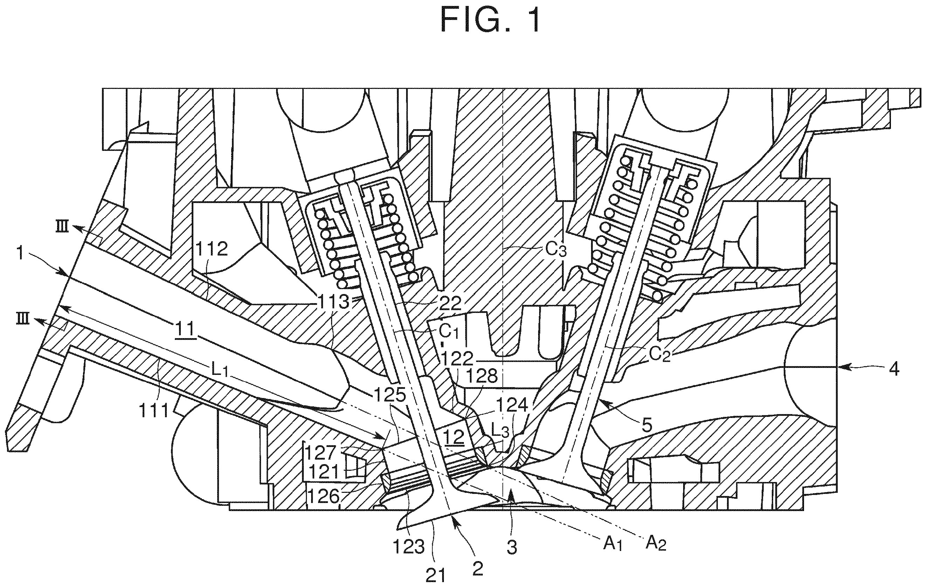

A description will be made on an embodiment of the invention with reference to the drawings. An internal combustion engine of the embodiment is an in-line three-cylinder internal combustion engine of port injection type. FIG. 1 to FIG. 4 show a ceiling section 3 of a combustion chamber, and an intake port 1 that is disposed in a cylinder head of the internal combustion engine in the embodiment.

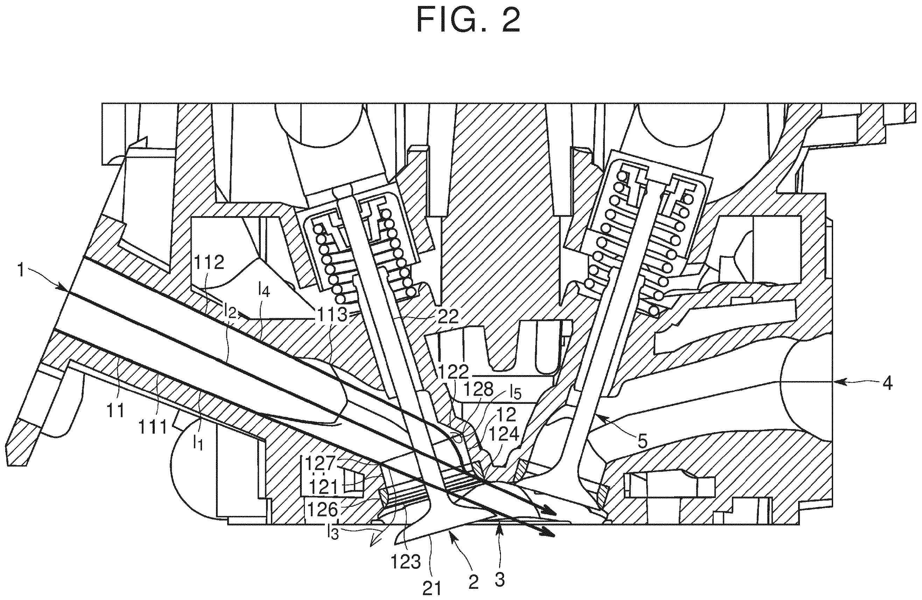

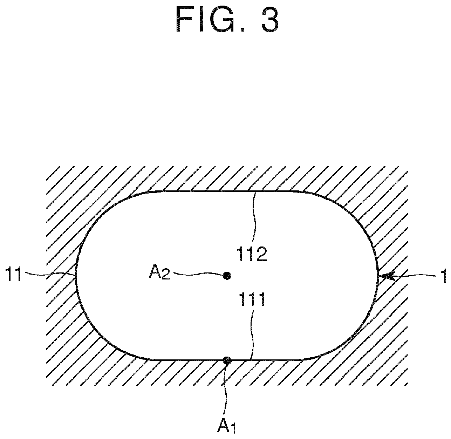

FIG. 1 and FIG. 2 are cross-sectional views in each of which the cylinder head is cut by a vertical cross section that runs a center axis C₁ of a valve body 2 of an intake valve and a center axis C₂ of a valve body 5 of an exhaust valve, and that is parallel to a center axis C₃ of a cylinder. The center axis C₁ is an axis that runs a center of a shaft section (a valve stem) 22 and extends along an advancing/retracting direction of the valve body 2. The center axis C₃ is an axis that runs a center of a bore wall and extends along an advancing/retracting direction of a piston (not shown). FIG. 3 is an end view that is taken along line III-III and shows a shape of an opening of a main flow passage section 11 of the intake port 1 in the same cylinder head. The valve body 2 of the intake valve in FIG. 1 is in a state of a maximum lift amount in which an opening degree of the intake valve, that is, a separation distance between an umbrella section 21 and a valve seat 123 becomes the maximum.

The intake port 1 includes the main flow passage section 11 and a throat section 12. The main flow passage section 11 leads intake air into a combustion chamber of the cylinder. The throat section 12 is interposed and communicates between the main flow passage section 11 and the ceiling section 3 of the combustion chamber. Each of a lower surface (a surface on a side that is close to the combustion chamber) 111 and an upper surface (a surface on a side that is far from the combustion chamber) 112 of the main flow passage section 11 of the intake port 1 is a flat surface that is inclined in a manner to extend toward the combustion chamber. Since an injector for fuel injection (not shown) is mounted on an upper side of the intake port 1, a portion of the upper surface 112 of the main flow passage section 11 is provided with a recess 113 that is recessed upward. A tip of the injector is housed in this recess 113 such that said injector is suppressed from interfering with a flow of the intake air. The lower surface 111 and the upper surface (other than the recess 113 for mounting of the injector) 112 of the main flow passage section 11 are substantially parallel to each other. However, strictly speaking, the lower surface 111 is more horizontal (closer to a surface that is orthogonal to the center axis C₃ of the cylinder) than the upper surface 112.

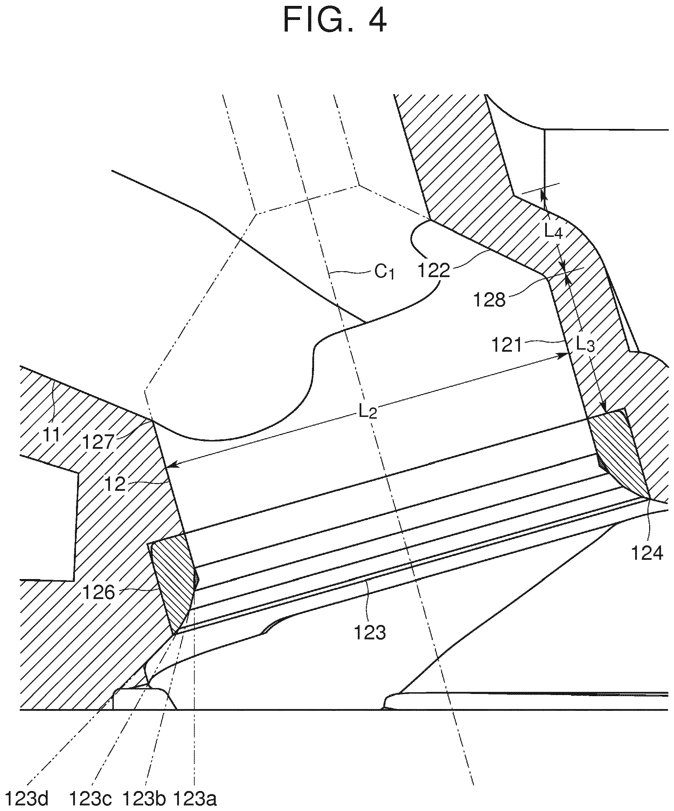

For a purpose of intensifying a tumble flow that is generated in the combustion chamber of the cylinder, the lower surface 111 of the main flow passage section 11 linearly extends to the throat section 12. An extended line A₁ that is defined by extending a lower edge of the main flow passage section 11 (a lowermost edge of the main flow passage section 11) toward the center axis of the cylinder is located above (on an opposite side from the combustion chamber) the umbrella section 21 of the valve body 2 of the intake valve in the state of the maximum lift amount. Accordingly, as shown in FIG. 2, an intake air I₁ that flows along the lower surface 111 of the main flow passage section 11 can vigorously flow into the combustion chamber while being straightened and avoided from colliding with the umbrella section 21 of the valve body 2 of the intake valve as much as possible. A length L₁ of the lower surface (the lower edge) 111 of the main flow passage section 11 that is in a linear shape in the side cross-sectional view is longer than three times a length of an internal diameter L₂ of a base section 121 of the throat section 12, which is shown in FIG. 4.

In addition, an extended line A₂ that is defined by extending a middle line located in the vicinity of the middle of the upper surface (the upper edge) 112 and the lower surface (the lower edge) 111 of the main flow passage section 11 toward the combustion chamber is located below (on the combustion chamber side) a portion 124 of the valve seat 123. The valve body 2 of the intake valve is seated on the valve seat 123. The portion 124 is the closest part of the valve seat 123 to the exhaust port 4. Accordingly, as shown in FIG. 2, an intake air I₂ that is distributed in the main flow passage section 11 can vigorously flow into the combustion chamber while being avoided from colliding with said portion 124 of the valve seat 123 (and the umbrella section 21 of the valve body 2 of the intake valve) as much as possible. Distances from the above middle line to the lower surface 111 and the upper surface 112 other than the recess 113 for mounting of the injector of the main flow passage section 11, each of which is in the linear shape in the side cross-sectional view, are substantially equal to each other. An inclined angle of the middle line is substantially at the middle of an inclined angle of the lower surface 111 and an inclined angle of the upper surface 112 of the main flow passage section 11. In other words, the middle line is more horizontal than the upper surface 112 and more perpendicular than the lower surface 111.

The throat section 12 has such a shape that a head section 122 in a partially truncated conical shape is provided on top of the cylindrical base section 121. The valve seat 123 of the intake valve is provided at a lower end of the base section 121. The lower surface 111 of the main flow passage section 11 crosses and is continuously connected to the base section 121 of the throat section 12. The lower surface 111 of the main flow passage section 11 crosses an internal circumferential surface of the base section 121 of the throat section 12 at a crossing position 127 while being bent (to describe in an extreme manner, a "pin angle" with a pointed tip is defined). In other words, the lower surface 111 of the main flow passage section 11 and the internal circumferential surface of the base section 121 of the throat section 12 are not smoothly connected via a curved surface. In this way, as shown in FIG. 2, when reaching the throat section 12 from the main flow passage section 11, the intake air I₁ that flows along the lower surface 111 of the main flow passage section 11 separates from the internal circumferential surface of the base section 121 of the throat section 12. This separation of the flow of the intake air I₁ causes a reduction in a flow rate of a flow I₃ that is curved toward the bore wall side of the cylinder (an external side along a radial direction of the cylinder) in a manner to avoid the valve body 2 of the intake valve. The flow I₃ that enters the combustion chamber after being curved toward the bore wall side generates a reverse tumble flow that swirls in an opposite direction from a tumble flow generated by the flows I₁, I₂ that flow linearly toward the center axis C₃ (or the exhaust port 4) side of the cylinder along an upper surface of the umbrella section 21 of the valve body 2 in the intake valve. The reduction in the flow rate of the flow I₃ that is curved toward the bore wall side leads to intensification of the desired tumble flow.

An upper edge 125 of the base section 121 of the throat section 12 is located at substantially the same height from the valve seat 123 for an entire circumference of the base section 121. The lower surface 111 of the main flow passage section 11 contacts this upper edge 125. The head section 122 of the throat section 12 also contacts this upper edge 125. An internal diameter at a lower end of the head section 122 in the partially truncated conical shape is equal to the internal diameter of the cylindrical base section 121. As shown in FIG. 1 and FIG. 2, an upper edge of the head section 122 of the throat section 12 in the cross section and the upper edge of the main flow passage section 11 are substantially aligned on the same line. The upper edge of the head section 122 of the throat section 12 in the cross section is an uppermost edge in a partially truncated conical shape. The upper edge of the main flow passage section 11 is an uppermost edge in the upper surface 112 other than the recess 113 for mounting of the injector. As shown in FIG. 4, a height dimension L₄ of the head section 122 that is along the center axis C₁ direction of the valve body 2 of the intake valve is smaller than a height dimension L₃ of the base section 121 that is along the same axis C₁ direction. The center axis C₁ of the valve body 2 of the intake valve is also a center axis of the base section 121 of the throat section 12.

An internal circumferential surface of the base section 121 and an internal circumferential surface of the head section 122 cross each other while being bent at a crossing position 128, at which the base section 121 of the throat section 12 crosses and is continuously connected to the head section 122. In other words, the internal circumferential surface of the base section 121 and the internal circumferential surface of the head section 122 are not smoothly connected via a curved surface. This seems to cause turbulence of an intake air I₄ that flows along the upper surface 112 of the main flow passage section 11 and further become an obstructive factor for an entire flow of the intake air. However, as shown in FIG. 2, it has become apparent from a simulation experiment by a computing system that a small vortex I₅ of airflow is generated at an internal corner of the crossing position 128 between the base section 121 and the head section 122 of the throat section 12. Since this vortex I₅ functions as an air cushion, for example, the intake air I₄ that flows along the upper surface 112 of the main flow passage section 11 can smoothly be guided to the combustion chamber. As a result, although the crossing position 128 between the base section 121 and the head section 122 of the throat section 12 has a bent shape, it is possible to secure a necessarily and sufficiently high flow rate of the intake air and a necessarily and sufficiently high tumble ratio.

If the height dimension L₃ of the base section 121 of the throat section 12 is too small, the intake air that flows along the lower surface 111 of the main flow passage section 11 collides with the umbrella section 21 of the valve body 2 of the intake valve. Then, some of the collided intake air is headed toward the crossing position 128 between the base section 121 and the head section 122 of the throat section 12. For this reason, the flow is stagnated at said crossing position 128, and the tumble flow is weakened. On the contrary, if the height dimension L₃ of the base section 121 of the throat section 12 is too large, the intake air that flows through the main flow passage section 11 collides with the portion 124 of the valve seat 123 that is closest to the exhaust port 4. At this time, a tendency that the flow of the intake air is further bent downward in a course from the main flow passage section 11 to the throat section 12 is increased. As a result, in conjunction with the collision with the umbrella section 21 of the valve body 2 of the intake valve, pressure loss is increased, and thus the flow rate of the intake air is reduced.

The throat section 12 is shaped by cutting the cylinder head as a cast member by using a sheet cutter. The above-described shape of the throat section 12 contributes to easiness of processing and shaping, improved processing accuracy, and a reduction in processing cost. If the base section 121 of the throat section 12 has an inner circumferential shape that is narrowed upward, an oblique drill for cutting such an inner circumferential shape is required. However, the oblique drill is not required for the base section 121 that has the cylindrical inner circumferential shape. In addition, even if errors in the shapes and dimensions of the main flow passage section 11 that is formed by using a core during casting of the cylinder head and of the throat section 12 (before being cut by the sheet cutter) with respect to design values or variations in the shapes and dimensions of the main flow passage section 11 and the throat section 12 among individual pieces are generated, the base section 121 and the head section 122 of the throat section 12 can easily conform to the correct design shapes and dimensions through processing, that is, the errors and variations can easily be corrected. This leads to improved performance of the internal combustion engine.

As shown in FIG. 2, when the flows I₁, I₂ that generate the desired tumble flow are intensified while the flow I₃ that generates the reverse tumble flow is weakened, there is a case where the flow rate of the intake air by the latter flow I₃ is reduced, that is, where filling efficiency of the intake air to the cylinder is degraded.

In view of the above, in this embodiment, as shown in FIG. 4 in an enlarged manner, four steps of tapered surfaces (valve hitting surfaces) 123a, 123b, 123c, 123d are provided in the valve seat 123, on which the umbrella section 21 of the valve body 2 of the intake valve is seated. In this way, the flow rate of the intake air that flows into the combustion chamber from the intake port 1 is increased. These tapered surfaces 123a, 123b, 123c, 123d are shaped in a seat ring 126 that is fitted to a lower end of the throat section 12 of the cylinder head as the cast member. Angles defined by the tapered surfaces 123a, 123b, 123c, 123d and the center axis C₁ of the valve body 2 of the intake valve are respectively 30°, 60°, 90°, and 120° in an order from the tapered surface 123a that is located the highest of all. The tapered surfaces 123a, 123b, 123c, 123d are formed by being cut in an order from above. If the highest tapered surface 123a does not exist, the tapered surfaces of the valve seat of the intake valve in the internal combustion engine are provided in three steps, and angles defined by the tapered surfaces and the center axis C₁ of the valve body 2 of the intake valve are respectively 60°, 90°, and 120°. The tapered surface 123b becomes the highest tapered surface, and this surface 123b crosses a cylindrical internal circumferential surface of the seat ring 126. In this case, a cross-sectional area of an opening of the seat ring 126, that is, a flow passage of the intake air is narrowed by a portion indicated by dots in FIG. 4. In the valve seat 123 of the intake valve in the internal combustion engine of this embodiment, the highest tapered surface 123a is added, and thus the four steps of the tapered surfaces are provided. Accordingly, the portion indicated by the dots in FIG. 4 is omitted, so as to enlarge the flow passage of the intake air.

In this embodiment, the internal combustion engine is configured that: the intake port 1 includes the main flow passage section 11, through which the intake air is distributed toward the combustion chamber of the cylinder, and the throat section 12 interposed between the main flow passage section 11 and the combustion chamber and continuously connect the main flow passage section 11 and the combustion chamber; the lower edge of the main flow passage section 11 is shaped linearly; the extended line A₁ that is defined by extending the lower edge thereof toward the combustion chamber is located above the umbrella section 21 of the valve body 2 of the intake valve in the state of the maximum lift amount; the crossing position 127 between the lower edge of the main flow passage section 11 and the throat section 12 is shaped in a bent shape; and the extended line A₂ that is defined by extending the middle line located in the vicinity of the middle of the upper edge and the lower edge of the main flow passage section 11 toward the combustion chamber is located below the portion 124 of the valve seat 123, on which the valve body 2 of the intake valve is seated, that is closest to the exhaust port 4.

According to this embodiment, the intake air flows along the main flow passage section 11 of the intake port 1 and linearly flows into the combustion chamber. Thus, the collision of said intake air with the valve seat 123 or the valve body 2 of the intake valve is alleviated or avoided. In addition, since the flow toward the exhaust port 4 side is not interfered in the combustion chamber, the tumble flow that is generated in the combustion chamber can be intensified.

Furthermore, the throat section 12 has the base section 121, an internal circumference of which is cylindrical, and the upper edge 125 thereof is located at substantially the same height from the valve seat for the entire circumference of the base section 121. Thus, the throat section 12 can be shaped by simple processing, and the variations in the shape and the dimension of a finished article thereof can be reduced. In other words, since the differences among the individual pieces of the cylinder head can be reduced, the cylinder head is suited for mass production.

The throat section 12 has the head section 122 on top of the base section 121, and the head section 122 has an internal circumference in a partially truncated conical shape. In addition, the crossing position 128 between the base section 121 and said head section 122 is shaped in the bent shape. Accordingly, the intake air that flows along the upper surface of the main flow passage section 11 of the intake port 1 can smoothly be guided into the combustion chamber, and thus the tumble flow can be intensified. At this time, the pressure loss is reduced, and the flow rate of the intake air is increased.

The invention is not limited to the embodiment that has been described in detail so far. Various modifications can be made to a specific configuration of each component within a scope of the invention, as defined by the appended claims.

The invention can be applied to an internal combustion engine that is mounted in a vehicle or the like.

## Claims

1. An internal combustion engine comprising:
a cylinder defining a combustion chamber;
an intake valve including a valve body (2), and the valve body including an umbrella section (21);
an exhaust port (4); and
an intake port (1) including a main flow passage section (11) and a throat section (12), the main flow passage section being configured to distribute intake air toward the combustion chamber, the main flow passage section communicating with the combustion chamber via the throat section, and the throat section including a valve seat (123) on which the valve body of the intake valve is seated, wherein
the main flow passage section includes a first surface (111) and a second surface (112), the first surface is located on a combustion chamber side of the main flow passage in a side cross-sectional view of the intake port, and the second surface (112) facing the first surface,
the first surface has a linear shape,
a first extended line (A₁) is located on a side, opposite from the combustion chamber, of an exhaust port side portion of the umbrella section (21) when the intake valve is in a state of a maximum lift amount, wherein the exhaust port side portion is a portion of the umbrella section closest to the exhaust port and the first extended line is defined by extending an end of the first surface toward the combustion chamber,
a crossing position (127) between the end of the first surface and the throat section has a bent shape, and
a second extended line (A₂) is located at the combustion chamber side rather than a portion of the valve seat, the portion is the closest portion of the valve seat to the exhaust port, and the second extended line being defined by extending a middle line located at the middle of the first surface and the second surface toward the combustion chamber.

2. The internal combustion engine according to claim 1, wherein
the throat section includes a base section (121) that has a cylindrical internal circumference, and
an edge on a main flow passage section side of the base section is located at the same height from the valve seat for the entire circumference of the base section.

3. The internal combustion engine according to claim 2, wherein
the throat section includes a head section (122) that has an internal circumference in a partially truncated conical shape, and the head section is located at the main flow passage section side rather than the base section, and
a crossing section (128) between the base section and the head section has a bent shape.

## Patentansprüche

1. Verbrennungsmotor mit:
einem eine Brennkammer definierenden Zylinder;
einem Einlassventil mit einem Ventilkörper (2), welcher einen Schirmabschnitt (21) aufweist;
einer Auslassöffnung (4); und
einer Einlassöffnung (19), welche einen Hauptströmungskanalabschnitt (11) und einen Kehlabschnitt (12) aufweist, wobei der Hauptströmungskanalabschnitt dazu ausgebildet ist, Einlassluft in Richtung hin zur Brennkammer zu verteilen, der Hauptströmungskanalabschnitt über den Kehlabschnitt mit der Brennkammer in Verbindung steht und der Kehlabschnitt einen Ventilsitz (123) aufweist, auf welchem der Ventilkörper des Einlassventils sitzt, wobei
der Hauptströmungskanalabschnitt eine erste Fläche (111) und eine zweite Fläche (112) aufweist, wobei die erste Fläche aus einer seitlichen Querschnittsansicht betrachtet (111) auf einer Brennkammerseite des Hauptströmungskanalabschnitts angeordnet ist und die zweite Fläche (112) der ersten Fläche gegenüberliegt,
die erste Fläche eine geradlinige Form hat,
wenn sich das Einlassventil in einem Zustand einer maximalen Hubhöhe befindet, eine erste Verlängerungslinie (A₁) auf einer von der Brennkammer abgewandten Seite eines auslassöffnungsseitigen Abschnitts des Schirmabschnitts (21) angeordnet ist, wobei der auslassöffnungsseitige Abschnitt ein Abschnitt des Schirmabschnitts ist, welcher der Auslassöffnung am nächsten ist und die erste Verlängerungslinie definiert ist, indem ein Ende der ersten Fläche in Richtung Brennkammer verlängert ist,
eine Übergangsposition (127) zwischen dem Ende der ersten Fläche und dem Kehlabschnitt eine gekrümmte Form hat, und
eine zweite Verlängerungslinie (A₂) weiter auf der Brennkammerseite angeordnet ist als ein Abschnitt des Ventilsitzes, welcher der der Auslassöffnung am nächsten liegende Abschnitt des Ventilsitzes ist, und die zweite Erweiterungslinie definiert ist, indem eine Mittellinie, die in der Mitte der ersten Fläche und der zweiten Fläche angeordnet ist, in Richtung Brennkammer verlängert ist.

2. Verbrennungsmotor gemäß Anspruch 1, wobei
der Kehlabschnitt einen Basisabschnitt (121) aufweist, der einen zylindrischen Innenumfang hat, und
eine hauptströmungskanalabschnittsseitige Kante des Basisabschnitts vom Ventilsitz aus über den gesamten Umfang des Basisabschnitts in der gleichen Höhe angeordnet ist.

3. Verbrennungsmotor gemäß Anspruch 2, wobei
der Kehlabschnitt einen Kopfabschnitt (122) aufweist, der einen teilkegelschnittförmigen Innenumfang hat und weiter auf der Hauptströmungskanalabschnittsseite angeordnet ist als der Basisabschnitt, und
ein Übergangsabschnitt (128) zwischen dem Basisabschnitt und dem Kopfabschnitt eine gekrümmte Form hat.

## Revendications

1. Moteur à combustion interne comprenant :
un cylindre définissant une chambre de combustion ;
une soupape d'admission comprenant un corps de soupape (2) et le corps de soupape comprenant une section en parapluie (21) ;
un orifice d'échappement (4) ; et
un orifice d'admission (1) comprenant une section de passage d'écoulement principal (11) et une section de gorge (12), la section de passage d'écoulement principal étant configurée pour répartir l'air d'admission vers la chambre de combustion, la section de passage d'écoulement principal communiquant avec la chambre de combustion via la section de gorge, et la section de gorge comprenant un siège de soupape (123) sur lequel le corps de soupape de la soupape d'admission est installé, dans lequel :
la section de passage d'écoulement principal comprend une première surface (111) et une seconde surface (112), la première surface est positionnée du côté de la chambre de combustion du passage d'écoulement principal sur une vue en coupe latérale de l'orifice d'admission, et la seconde surface (112) faisant face à la première surface,
la première surface a une forme linéaire,
une première ligne étendue (A₁) est positionnée d'un côté, opposé à la chambre de combustion, de la partie du côté de l'orifice d'échappement de la section en parapluie (21) lorsque la soupape d'admission est dans un état d'une quantité de levage maximum, dans lequel la partie du côté de l'orifice d'échappement est une partie de la section en parapluie la plus proche de l'orifice d'échappement et la première ligne étendue est définie en étendant une extrémité de la première surface vers la chambre de combustion,
une position de croisement (127) entre l'extrémité de la première surface et la section de gorge a une forme pliée, et
une seconde ligne étendue (A₂) est positionnée du côté de la chambre de combustion plutôt que du côté d'une partie du siège de soupape, la partie est la partie la plus proche du siège de soupape par rapport à l'orifice d'échappement, et la seconde ligne étendue étant définie en étendant une ligne médiane positionnée au milieu de la première surface et de la seconde surface vers la chambre de combustion.

2. Moteur à combustion interne selon la revendication 1, dans lequel :
la section de gorge comprend une section de base (121) qui a une circonférence interne cylindrique, et
un bord du côté de la section de passage d'écoulement principal de la section de base est positionné à la même hauteur du siège de soupape pour toute la circonférence de la section de base.

3. Moteur à combustion interne selon la revendication 2, dans lequel :
la section de gorge comprend une section de tête (122) qui a une circonférence interne selon une forme partiellement tronconique, et la section de tête est positionnée du côté de la section de passage d'écoulement principal plutôt que du côté de la section de base, et
une section de croisement (128) entre la section de base et la section de tête a une forme pliée.
